# EUROPÄISCHE PATENTANMELDUNG

(11) **EP 0 806 464 A2**
(43) Veröffentlichungstag der Anmeldung: **12.11.1997**
(21) Anmeldenummer: 97107251.7
(22) Anmeldetag: 02.05.1997
(51) Int. Cl.: C09J 7/02

(54) **Doppelseitiges Klebeband**

(30) Priorität: 07.05.1996 DE 29608242 U
(71) Anmelder: Klöber, Johannes, 58256 Ennepetal (DE)
(72) Erfinder: Corthobius, Manfred, 58332 Schwelm (DE)
(74) Vertreter: Grundmann, Dirk, Dr.

(57) **Zusammenfassung**

Die Erfindung betrifft ein Klebeband (1) mit mehreren wirkungsunterschiedlichen Klebeschichten, von denen die eine, als Butylkleber gestaltete Schicht (2) zur einen Seite freilegbar ist und die andere, eine Haftschmelzkleberschicht (3) zur entgegengesetzten Seite weist, und schlägt zur Erzielung einer gebrauchsvorteilhaften Ausbildung sowie produktschützenden Bereithaltung des Klebebandes (1) vor, daß die Haftschmelzkleberschicht (3) unmittelbar auf der Oberseite (4) der um ein Vielfaches dickeren Butylkleberschicht (2) flächendeckend angeordnet ist und von einer doppelseitig klebstoffabweisenden, die Unterseite der Butylkleberschicht (2) abdeckenden Schutzfolie (5) durch Aufrollen des Bandes (1) seine oberseitige Abdeckung findet.

## Beschreibung

Die Erfindung bezieht sich auf ein Klebeband mit mehreren wirkungsunterschiedlichen Klebeschichten, von denen die eine, als Butylkleber gestaltete Schicht zur einen Seite freilegbar ist und die andere, eine Haftschmelzkleberschicht, zur entgegengesetzten Seite weist.

Kleber auf Butylkautschukbasis erweist sich im Falle rauher, sogar stärker zerklüfteter Zuordnungsflächen wie Mauerwerk, grob gehobelter Bretter etc. noch als äußerst haftfreudig, dies sogar in Langzeitwirkung. Die dem Butylkleber zugeordnete wirkungsunterschiedliche Klebeschicht gibt einem solchen Klebeband eine vorteilhafte Brückenfunktion, indem nämlich über die diesbezügliche spezielle Klebeschicht die in dieser Richtung erstrebte spezielle Haftung erreichbar wird. Die andere Seite der Butylkleberschicht ist zum Gebrauch des Klebebandes freilegbar.

Aufgabe der Erfindung ist es, ein gattungsgemäßes Klebeband gebrauchsvorteilhaft sowie in produktschützender Bereithaltung auszubilden.

Gelöst ist diese Aufgabe durch die in den Ansprüchen angegebene Erfindung.

Zufolge solcher Ausgestaltung ist ein gattungsgemäßes Klebeband erhöhten Gebrauchswertes erzielt:
Der liegt zum einen im gebrauchsvorteilhaften Aufbau begründet und zum anderen in einer selbstschützenden Bereithaltung. Hierzu wird zunächst vorgeschlagen, daß die Haftschmelzkleberschicht unmittelbar auf der Oberseite der um ein Vielfaches dickeren Butylkleberschicht flächendeckend angeordnet ist und von einer doppelseitig klebstoffabweisenden, die Unterseite der Butylkleberschicht abdeckenden Schutzfolie durch Aufrollen des Bandes seine oberseitige Abdeckung findet. Die unmittelbare, flächenidentische Überlagerung der beiden wirkungsunterschiedlichen Klebeschichten vereinfacht die Bauform. Genutzt ist dabei die ausreichende Haftwirkung der Butylkleberschicht, um die Haftschmelzkleberschicht rittlings aufzunehmen. Es bedarf keines Haftvermittlers. Zudem ergibt sich aufgrund der Flächengleichheit weder ein Vermischen der individuellen Kleberwirkungen noch ein Verlaufen oder die Ausübung einer Wirkung der Butylkleberschicht in der Wirkrichtung, die der Haftschmelzkleberschicht zugedacht ist. Die meist in sich fester strukturierte Haftschmelzkleberschicht fungiert zudem selbst als stabiler Träger der um ein Vielfaches dickeren Butylkleberschicht, die in aller Regel recht weich ist, abgestimmt auf die erstrebte Wirkung einer innigen Verbindung auch bzw. vor allem mit rauhen Auflageflächen. Die dabei zugeordnete doppelseitig klebstoffabweisende Schutzfolie hinterlegt die relativ dickwandige Butylkleberschicht auf der anderen Seite. Insoweit ergibt sich durch Aufrollen des Bandes unter Benutzung der Schutzfolie zugleich die oberseitige Abdeckung der haftstarken Butylkleberschicht über den entstehenden Wickelrücken bzw. Rollenrücken. Sie wird nicht so leicht schmutzpaniert. In der Verlegeform kann die Schutzfolie wahlweise am Klebeband verbleiben oder weggenommen werden, welche Auswahlmöglichkeit den Einsatz variierbar macht. Schließlich wird vorgeschlagen, daß in die Haftschmelzkleberschicht in Bandlängsrichtung verlaufende Zugstabilisierungsfäden eingebettet sind. Eine solche Armierung optimiert die Trägerfunktion der Haftschmelzkleberschicht. Außerdem kommt es nicht zu Längenveränderungen des Klebebandes, es sei denn ein entsprechendes Reckverhalten wäre erstrebt.

Dann würden dehnfähige Fäden verwendet. Da die stabilisierte Haftschmelzkleberschicht unter dem Gedanken ihres Rückenschutzes über die Schutzfolie dem Wickelkern näher liegt, liegt sie selbst nicht in der dehnbeanspruchten Zone, sondern im Bereich der Druckspannung, also außerhalb der neutralen Faser des Laminats. Die dem gegenüber weichere Haftschmelzkleberschicht "bügelt" den wickelbedingten Längungsbedarf aus. So wird eine praktisch verwellungsfreie Rollenform erzielt. Die periphere Abstützung der relativ weicheren Butylkleberschicht läßt sich dabei bestens über die Schutzfolie erreichen, die sogar leichten radialen Pressdruck auf die Butylkleberschicht ausübt. Letztendlich wird noch vorgeschlagen, daß die Schutzfolie die Butylkleberschicht breitenmäßig an beiden Schmalkanten überragt. So entsteht auf den Breitflächen der Wickelrolle ein spiralförmiger Schutzsteg.

Der Gegenstand der Erfindung ist nachstehend anhand eines nur abschnittsweise dargestellten Klebebandes erläutert.

Das in seiner Gesamtheit mit 1 bezeichnete Klebeband ist mehrschichtig aufgebaut. Es umfaßt einen klebeaktiven und einen schützenden Bereich.

Der klebeaktive Bereich wird von einer Butylkleberschicht 2 gestellt und einer sie überlagernden Haftschmelzkleberschicht 3.

Beide Klebeschichten sind wirkungsunterschiedlich.

Die Butylkleberschicht 2 ist permanent wirkend und bedarf nicht weiterer Bedingungen;
die Haftschmelzkleberschicht 3 bedarf dagegen der Aktivierung, beispielsweise der thermischen Behandlung.

Beide Klebeschichten sind in einer gemeinsamen Fuge, besser Grenzzone, Rücken an Rücken miteinander verbunden. Hierzu kann vorteilhaft die Haftkraft der Butylkleberschicht 2 genutzt werden. So liegt die Haftkleberschicht 3 direkt auf der Oberseite 4 der Butylkleberschicht 2 flächendeckend auf. Diese Seite ist daher ganz durch die Haftschmelzkleberschicht 3 abgedeckt.

Die Butylkleberschicht 2 weist die mehrfache Dicke x der Haftschmelzkleberschicht 3 auf. Die Dicke der letzteren liegt bei ca. 0,5 mm. Die Breite der Haftschmelzkleberschicht 3 beträgt ca. 20 mm.

Bei gleicher Breite beträgt die Dicke der Butylkleberschicht 2 ca. 1,5 mm.

Beide längsverlaufenden Schmalkanten des Klebebandes 1 enden bündig.

Nun zum eigentlichen schützenden Bereich des Klebebandes 1: Hierzu dient eine Schutzfolie 5.

Letztere ist als Papierstreifen realisiert. Ein solcher Papierträger deckt die Unterseite 6 der Butylkleberschicht 2 ab.

Die Schutzfolie 5 läßt sich willensbetont vom Klebeband 1 lösen. Hierzu ist der Papierträger respektive die Schutzfolie 5 silikonisiert. Es liegt eine beidseitige Silikonisierung vor.

In Beachtung der wirkungsunterschiedlichen Klebeschichten ist die der Haftschmelzkleberschicht 3 zugewandte Seite 5' der Schutzfolie 5 angepaßt ausgestattet auf das entsprechende Wirkverhalten der Butylkleberschicht 2, die sie kontaktiert.

Die der Butylkleberschicht 2 abgewandte Seite 5'' der Schutzfolie 5 hingegen ist auf das Wirkverhalten der anderen Klebeschicht 3 abgestimmt. Hier genügt praktisch schon eine ganz schwache, also haftmindernde Ausrüstung. Bei einer Haftschmelzkleberschicht, die beispielsweise ohne aktivierende Behandlung gar keine Klebekraft bietet, kann zum Zusammenhalt der Wickellagen der Rolle anstatt der erwähnten Silikonisierung sogar eine schwach klebend wirkende Ausrüstung treten. Dadurch wäre die Schutzfolie 5 auf der einen Seite 5' haftschwächend und auf der anderen Seite 5'' haftfreudig.

Die vorratsbildende Wickel- oder Rollform ist nicht dargestellt, da leicht vorstellbar. Bevorzugt ist eine Wickelweise, gemäß der die Schutzfolie 5 außen liegt. Die Schutzfolie 5 bildet einen peripheren Schutz, wobei die in der dargestellten Figur oben liegende Haftschmelzkleberschicht 3 in einer entsprechenden Spiralfuge schützend aufgenommen würde, indem sich die Außenseite 5'' der Schutzfolie 5 auf die Oberseite 3' der Haftschmelzkleberschicht 3 legt.

Bei umgekehrter Einrollung würde diese Oberseite 3' außen liegen.

Als Beispiel einer Verlegungsform sei auf die Anordnung einer sogenannten glatten Unterspannbahn verwiesen. Diese wird in traufseitig abfallend angeordneten Bahnabschnitten verlegt. Die Verbindung solcher benachbarter Bahnabschnitte kann stoßend geschehen. Das beschriebene Klebeband 1 überbrückt die entsprechende Stoßfuge. Durch Aktivierung der Haftschmelzkleberschicht 3 wird die Unterspannbahn oder bei nach innenseitigen Aufbau eine entsprechende glatte Dampfsperre randbefestigt.

Je nach Verlegungsart kann dabei die Schutzfolie 5 an der Butylkleberschicht 2 verbleiben.

Soll dagegen eine Verbindung beispielsweise mit einem wandseitigen, meist groben Untergrund bzw. sogar Mauerwerk herbeigeführt werden, so wird die Butylkleberschicht 2 freigelegt und das Kleberkissen via Unterseite 6 angedrückt. Es ergibt sich so eine über längste Gebrauchszeiten standhaltende Klebeverbindung.

Zur Armierung der Haftschmelzkleberschicht 3 enthält diese Zugstabilisierungsfäden 7. Die sind in die kleberschicht eingebettet und verlaufen in Bandlängsrichtung. Es ist eine im wesentlichen parallele Anordnung gewählt.

Zu den Schmalkanten des Klebebandes 1 besteht ausreichender Abstand. Wie ersichtlich, sind insgesamt vier solcher Zugstabilisierungsfäden 7 eingebracht.

Aus der zeichnerischen Darstellung ist überdies zu entnehmen, daß die Schutzfolie 5 an beiden Schmalkanten der Butylkleberschicht 2 respektive Haftschmelzkleberschicht 3 diese Schichten seitlich überragt. Das führt zu freistehenden, an den besagten Schmalkanten deutlich vorspringenden Schutzstegen 8, die in der Wickelform auf beiden Breitseiten des Wickels bzw. der Rolle einen spiralförmigen Rippenmantel formen. Die Schutzstege 8 können sich bei partieller Belastung als Stegschar schützend an die Schmalseiten des Klebebandes 1 legen. In jedem Fall ist eine schützende Funktion auch bei stehender Anordnung der Stege gegeben, dies im Sinne eines Berühungsschutzes, indem die Überstände distanzierend wirken.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

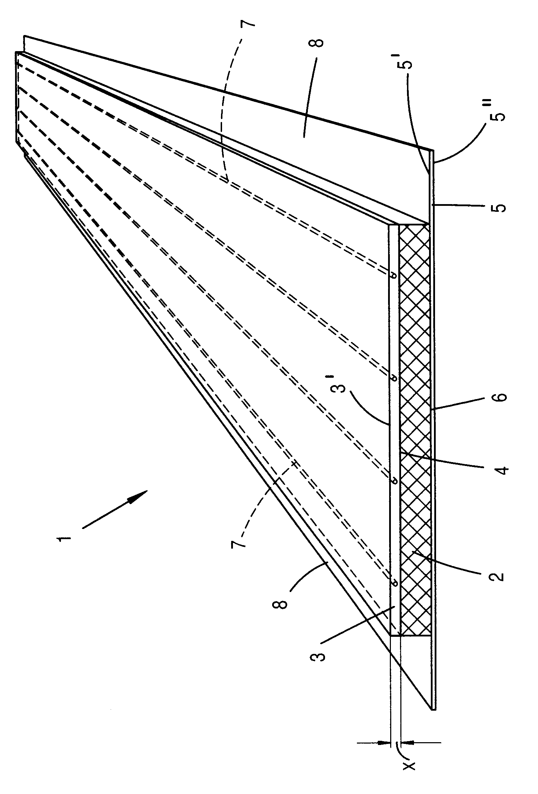

## Patentansprüche

1. Klebeband (1) mit mehreren wirkungsunterschiedlichen Klebeschichten, von denen die eine, als Butylkleber gestaltete Schicht (2) zur einen Seite freilegbar ist und die andere, eine Haftschmelzkleberschicht (3) zur entgegengesetzten Seite weist, dadurch gekennzeichnet, daß die Haftschmelzkleberschicht (3) unmittelbar auf der Oberseite (4) der um ein Vielfaches dickeren Butylkleberschicht (2) flächendeckend angeordnet ist und von einer doppelseitig klebstoffabweisenden, die Unterseite der Butylkleberschicht (2) abdeckenden Schutzfolie (5) durch Aufrollen des Bandes (1) seine oberseitige Abdeckung findet.

2. Klebeband nach Anspruch 1 oder insbesondere danach, dadurch gekennzeichnet, daß in die Haftschmelzkleberschicht (3) in Bandlängsrichtung verlaufende Zugstabilisierungsfäden (7) eingebettet sind.

3. Klebeband nach einem oder mehreren der vorhergehenden Ansprüche oder insbesondere danach, dadurch gekennzeichnet, daß die Schutzfolie (5) an beiden Schmalkanten die Butylkleberschicht (2) breitenmäßig überragt.
